# EUROPEAN PATENT SPECIFICATION

(11) **EP 3 605 382 B1**
(45) Date of publication and mention of the grant of the patent: **01.12.2021**
(21) Application number: 18187008.0
(22) Date of filing: 02.08.2018
(51) Int. Cl.: G06K 7/00, G06K 17/00

(54) **MOBILE APPARATUS, METHOD AND SYSTEM FOR PROGRAMMING A SPORTS TIMING RFID TRANSPONDER**
MOBILE VORRICHTUNG, VERFAHREN UND SYSTEM ZUR PROGRAMMIERUNG EINES RFID-TRANSPONDERS FÜR SPORTZEITEN
APPAREIL MOBILE, PROCÉDÉ ET SYSTÈME DE PROGRAMMATION D'UN TRANSPONDEUR RFID DE CHRONOMÉTRAGE SPORTIF

(43) Date of publication of application: 05.02.2020
(73) Proprietor: race result AG, 76327 Pfinztal (DE)
(72) Inventor: Petersen, Sönke, 76131 Karlsruhe (DE); Klohr, Nikias, 76297 Stutensee (DE)
(74) Representative: Durm Patentanwälte PartG mbB

(56) References cited:
- US-A1- 2007 030 153
- US-A1- 2011 018 689

## Description

The present invention relates to a mobile apparatus, a method and a system for programming a sports timing RFID transponder on-site at a sports event. The present invention further relates to using a mobile apparatus on-site at a sports event.

In the field of timing at sports events, for example running events, marathons, bicycle races, skiing races, car races, horse races or comparable events, timing of participants' start, finish, and split times plays an important role. In prevailing timing systems, oftentimes a person, a vehicle or an animal, whose time is to be measured, carries a radio element (e.g. an active or passive RFID tag) for non-contact, automated timing. Runners, for instance, may carry radio elements that are attached to shoe laces or to a bib number for being attached to the participants' (athlete's) shirt or pants or also to a sports equipment like a bike, a cart or a rifle etc. In the case of cycling events, it is possible to attach respective radio elements to the handlebar of a bicycle.

At start, finish, and split time positions along a track, measuring points are provided to detect the radio element. For this purpose, a measuring point comprises a corresponding antenna and data processing means to process the received data and to determine a passing time, i.e. a moment at which the radio element passes the measuring point. Usually, the determined passing times for the participants are then communicated to a central evaluation point.

In this context, a transponder particularly designates a radio element that is able to transmit as well as to receive radio signals. Herein, a transponder particularly refers to a passive RFID tag that does not have an integrated energy source. Upon passing a measuring point, the transponder transmits an identification information (ID) in response to a stimulus from an antenna of the measuring point. To identify the participants, this identification information usually has to be unambiguously correlated to the identity of a respective participant. For this, the transponders are usually programmed with an ID that is unique for the respective sports event and that can be allocated to a participant of the sports event.

In larger sports events such as marathons etc. participants register, e.g. via an internet portal. After the registration each participant obtains a transponder and possibly a corresponding bib number. The transponder and bib number can be distributed before the sports event or on-site at the event. In addition to participants that register early, late registrations (i.e. participants that register shortly before the event or at the event) and also participants that arrive at the sports event without having registered before have to be taken into account. These participants have to be provided with an adequately programmed transponder with identification information that is unique for the respective sports event.

The programming of the transponders is usually carried out by the transponder manufacturer. The programmed transponders are then shipped to the sports timer. Since it is required to identify the programmed identity information in the process of allocating it to a bib number or to an athlete's ID, it is usually necessary that a label is printed on the transponder that corresponds to the programmed ID. The programming and labelling is usually carried out in a joint process by means of an RFID-printer. These devices are usually heavy, expensive and designed for stationary use.

Since sports timing RFID transponders are often attached to a bib number to be worn on an athlete's chest, a sufficient distance to the athlete's body has to be assured to avoid damping effects and a bad reception of signal. To cope with this, sports timing RFID transponders, in particular ultra-high frequency (UHF) transponders, often include a so-called spacer for providing a distance of the transponder's antenna to the human body. Usually, a lightweight foam material with a thickness of a few millimeters is attached or laminated to the transponder. If spacers are used, the process of programming and labelling is further complicated since normal label printers usually do not allow printing on the spacer material without modifications, so that specialized equipment is necessary. Also, it is possible to use a cutout in the spacer to be able to read a label. The use of spacers makes the manufacturing of the sports timing process yet more complex and cost-intensive.

One problem with the current approach is that the total number of transponders for a certain sports event has to be decided at a certain point in time early enough for production. Then, the transponders can be manufactured and shipped to the sports timer for distribution to the participants. Since the transponder costs are considerable, the sports timers usually place their orders as late as possible to be able to have a good estimate of the required number of transponders. This results in high costs for the logistics since it has to be assured that the transponders are available in due time. Usually, however, it is still necessary that a surplus number of transponders is ordered for late registrations. Unused transponders are disposed of after the sports event since it is usually not possible to assure that the remaining transponders have IDs that are compatible with IDs that are used at a subsequent sports event. As a result, high costs occur and it is difficult to assure that all late registrations can be supplied with transponders.

US 2011/0018689 A1 relates to secure modular applicators to commission wireless sensors. RFID tags or inlays are pre-loaded into cartridges prior to consumption and an encoder mechanism and corresponding antenna encodes and verifies the programmable RFID tags within the cartridges. This improvement adds significant convenience of loading RFID tags and enhances overall reliability of handling and applying the RFID tags.

US 2007/0030153 A1 relates to a low-cost RFID labelling device. A system dispensing, reading and verifying RFID tags is disclosed. The system includes a label dispenser that dispenses labels that contain RFID tags from a bulk label storage device, an RFID reader/writer device that is operatively connected to the label dispenser. The RFID reader/writer device reads and codes tags which are embedded within these labels. The RFID reader/writer is configured to function in close range and thus provide adequate fidelity of coding and transfer of the individual program tags.

In view of this, the present invention faces the problem of reliably assuring that a sufficient number of adequately programmed transponders is available at the sports event. Large number of unnecessary surplus transponders should be avoided. In particular, costs of wasted transponders should be avoided and costs for logistics should be reduced.

To solve this problem, a first aspect of the present invention relates to a mobile apparatus for programming a sports timing RFID transponder on-site at a sports event, comprising:
- a supply unit for holding a supply of transponders;
- a programmer unit including a programming antenna for programming the transponder with an identification information;
- a conveyor unit for conveying the transponder from the supply unit to a programming position, in which a transponder antenna of the transponder is aligned with the programming antenna, and from the programming position to a dispensing position, in which the transponder can be removed after programming;
- a processing unit for controlling the programmer unit and the conveyor unit;
- a robust housing for protecting the programmer unit, the conveyor unit and the processing unit from external force effects; and
- a reader unit including a reader antenna for reading a transponder in a reading position, wherein
- said reading position is outside the robust housing in an immediate vicinity of the reader antenna.

Another aspect of the present invention relates to a method for programming a sports timing RFID transponder on-site at a sports event, comprising the steps of:
- holding a supply of transponders in a supply unit;
- programming the transponder with an identification information in a programmer unit including a programming antenna;
- conveying the transponder with a conveyor unit from the supply unit to a programming position, in which a transponder antenna of the transponder is aligned with the programming antenna, and from the programming position to a dispensing position, in which the transponder can be removed after programming;
- controlling the programmer unit and the conveyor unit;
- protecting the programmer unit, the conveyor unit and the processing unit from external force effects by a housing of a mobile apparatus; and
- reading a transponder in a reading position by means of a reader unit including a reader antenna of the mobile apparatus, wherein
- said reading position is outside the robust housing in an immediate vicinity of the reader antenna.

Yet another aspect of the present invention relates to a system for programming a sports timing RFID transponder on-site at a sports event, comprising:
- a mobile apparatus as defined above;
- a scanner device for providing a scan of a participant identifier; and
- a sports timing RFID transponder.

Still another aspect of the present invention relates to using a mobile apparatus as defined above on-site at a sports event.

Preferred embodiments of the invention are defined in the dependent claims. It shall be understood that the claimed method, system and use have similar and/or identical preferred embodiments as the claimed apparatus, in particular as defined in the dependent claims and as disclosed herein.

The mobile apparatus according to the present invention is suitable for being used on-site at a sports event. No network connection or the like is required. A

A supply of transponders is fed into the apparatus. A transponder is conveyed from this supply to a programmer unit, which programs the transponder, i.e. flashes an identification information to the transponder. This identification information can then be used to identify a participant of the sports event upon passing a corresponding RFID reader including an RFID antenna at a timing position (in particular a start- or finish-line). In the mobile apparatus, the transponder is programmed and then conveyed to a dispensing position where it can be removed by an operator. Both the programmer unit and the conveyor unit are controlled by a processing unit in the apparatus. All components are put together in a robust housing to allow for a mobile use outside the controlled environment of a manufacturing facility and in particular on-site at a sports event.

In comparison to the current process of programming and labelling the transponders, the present invention provides a different approach. Instead of labelling and programming a sports timing transponder in a manufacturing facility by specialized personnel and by using specialized equipment, the programming of the transponder is carried out by a user on-site at a sports event. Due to the on-site programming it is not necessary to label the transponder since the transponder can be attached to a respective bib number or handed out to an athlete directly after the programming. It is not necessary to have a readable label on the transponder that corresponds to a programming of the transponder. Due to the mobile construction of the apparatus it can be used on-site and a labelling is not necessary.

The apparatus uses transponders without any pre-programming or with a pre-programming that should not to be used for identifying the athletes in the sports event (the transponder is unprogrammed in respect of the ID of the athlete). Thereby, it becomes possible to completely decouple the process of manufacturing and delivering the transponders from the programming and assigning an ID that corresponds to a bib number or a participant's name etc. A surplus production is prevented since it is not necessary to provide a large number of suitably pre-programmed spare transponders at the sports event. The mobile apparatus allows programming transponders upon requirement at the sports event. Costs are saved and an efficient and reliable process of using RFID identification at a sports event is provided. It is assured that a sufficient number of transponders is available. Remaining transponders that are not programmed with a participant's ID can be used in the next event.

In a preferred embodiment, the mobile apparatus does not comprise a printing unit for labelling the transponder. By refraining from integrating a printing unit, it becomes possible to design a robust apparatus that can be transported to the sports event and used as a stand-alone device. No complex printing unit is required which is usually very susceptible to vibrations and can easily be damaged, in particular if it is necessary to print on a spacer material, e.g. by means of a thermo-transfer-printing process. It is not necessary to provide the various supply materials for the printing process. The transponders are programmed and directly applied to the corresponding bib number. Current RFID programming units include printing units and are thus not suitable for an on-site use.

In another preferred embodiment, the mobile apparatus comprises a reader unit including a reader antenna for reading a transponder in a reading position. Said reading position is outside the robust housing in an immediate vicinity of the reader antenna. By making use of an additional reader unit with a reading antenna (can also be referred to as check antenna) in the mobile apparatus, it becomes possible to check the programming of a transponder. Since the transponders are not labelled, i.e. no identification information is printed onto the transponder, it is oftentimes required to check whether the correct transponder is applied to a certain bib number directly after the programming. The reader unit thus allows to avoid mistakes in the assignment procedure and makes sure that the correct race time is assigned to an athlete participating in the sports event. By placing the reading position in an immediate vicinity, it is assured that the correct transponder is read out to avoid ambiguities. It becomes possible to save costs by avoiding mistakes in the assignment procedure that could have the effect that another transponder has to be programmed to assure a correct programming. Material and transponders are saved.

In a preferred embodiment, the robust housing includes a metal material and the reader antenna is a slot antenna in said metal material. The reader antenna is a near-field antenna, preferably a capacitive-type near-field antenna with a resonance ground plane. Usually, the robust housing is manufactured from a metal material to make it robust against external forces. In such a metal material a slot can be produced having an adequate length in view of the wavelength of the used RFID technology. This slot then represents an antenna that allows reading a transponder positioned in front of said antenna. The slot antenna is robust against external forces which again contributes to the robust design of the mobile apparatus. In addition, an efficient manufacturing is possible.

In another preferred embodiment, the mobile apparatus comprises a first position sensor for determining whether the transponder is in the programming position. The processing unit is then configured to control the programmer unit to program the transponder when the transponder is in the programming position. Preferably, the first position sensor includes a photosensor. By automatically detecting whether the transponder is in the programming position by means of a sensor, an automated control of the programmer unit becomes possible. An incorrect programming is prevented. It is made sure that the transponder is in a correct position before programming it. The first position sensor thereby contributes to the usability of the mobile apparatus for lay persons that are not experienced with programming RFID transponders. By making use of a photosensor, such as an LED in combination with a corresponding detector, a reliable position control becomes possible. Usability of the mobile apparatus is assured.

In yet another preferred embodiment, the mobile apparatus comprises a second position sensor for determining whether the dispensing position is free. The processing unit is configured to control the conveyor unit to convey the transponder to the dispensing position when the dispensing position is free. Preferably, the second position sensor includes a photosensor. The second position sensor assures that the transponder is only transported from the programming position to the dispensing position when the previously produced transponder has been removed. Since the transponder is not labelled, it has to be assured that the programmed transponders are not mixed up. The second position sensor reduces the risk of mistakes by the operator of the apparatus. A new transponder can only be produced (programmed) after the previously produced transponder has been removed. Usability of the device is further improved and costly mixups due to unnecessarily programmed transponders are avoided.

In yet another preferred embodiment, the mobile apparatus comprises a shielding unit for shielding the transponders from being programmed when the transponder is in a feeding position for being conveyed to the programming position in a next step. Said shielding unit preferably comprises a lower metal plate having a size of at least a size of the transponder and being below the transponder when the transponder is in the feeding position and/or an upper metal plate having a size of at least a size of the transponder and being above the transponder when the transponder is in the feeding position. By making use of the shielding unit it becomes possible to avoid errors in the programming procedure. In particular, a certain percentage of transponders is usually malfunctioning. These malfunctioning transponders cannot be programmed. Since the transponder antenna, however, functions as a repeater, it is possible that a nearby transponder is erroneously programmed due to crosstalk. The shielding unit prevents this crosstalk. It is assured that a correct programming is applied. Errors are avoided. Costs for erroneously produced transponders are reduced.

In yet another preferred embodiment, the programmer unit is configured to read a security feature from the transponder before programming the transponder. The processing unit is configured to verify whether the security feature indicates that the transponder originates from a trusted manufacturer based on a public key available in the processing unit. The programmer unit is configured to only program the transponder when the transponder originates from a trusted manufacturer. A public-private key cryptography process is used for assuring that a transponder from a trusted manufacturer is used. Since the mobile apparatus only needs to verify an identity, it is sufficient that the mobile apparatus has a public key. The private key is only required upon manufacturing the chips or upon programming the security feature. The mobile apparatus can function as a stand-alone device without requiring an internet connection to a server or the like. Programming errors resulting from low-grade transponders that are not from a trusted manufacturer are avoided. The error rate in the entire sports timing procedure is reduced.

In yet another preferred embodiment, the mobile apparatus comprises a first input interface for connecting to a scanner device for providing a scan of a participant identifier. This scanner device particularly includes a barcode scanner and/or a camera. The processing unit is then configured to determine the identification information based on the scan and to control the programmer unit to program the transponder with the determined identification information. Said first input interface preferably includes a USB port. Usually, it is required to assign a certain bib number to a transponder ID. This assignment can be automated by making use of a scanner device. For instance, it is possible that the bib number of a participant in the sports event includes a barcode representing the participant's ID. By reading this barcode, the participant's ID can directly be programmed to the transponder. Errors due to faulty operation by lay operators are reduced. It is assured that the correct ID is programmed to the transponder. In addition, the process is accelerated and made more efficient.

In yet another preferred embodiment, the mobile apparatus comprises a second input interface for connecting to a data carrier storing an identification information. This second input interface preferably includes a USB port and this data carrier preferably includes a USB stick. The processing unit is configured to control the programmer unit to program the transponder with the identification information on the data carrier. Often, there already exists an assignment between participants and respective identification information that is to be programmed to the transponder. Based on this list, the processing unit can control the programmer unit to program the transponder appropriately. It becomes possible to batch-process a number of transponders. An efficient handling is obtained.

In yet another preferred embodiment, the apparatus comprises an energy interface for connecting to an external energy source providing a low voltage. Alternatively or additionally, the mobile apparatus comprises an internal energy supply, in particular a rechargeable battery. Usually, a power supply is available at the location of the sports event. However, it is also possible to operate the mobile apparatus by means of a battery corresponding to an internal energy supply and making the operation of the apparatus completely self-sufficient.

In a preferred embodiment, the supply unit comprises a holding bracket for holding a roll of transponders on a substrate. This holding bracket is configured for being folded from a holding position, in which the roll of transponders can be held, to a transport position, in which a total size of the mobile apparatus is reduced. Usually, transponders that have not yet been programmed with the participant's ID, in particular transponders that include spacers, are stored and provided on a substrate (e.g. plastic or paper) and reeled to form a roll of transponders. This roll can be quite large and can be fed into the apparatus as supply of transponders. By making use of a foldable construction for the supply unit, it becomes possible to facilitate the transport of the mobile apparatus. In particular, if transponders with spacers are used and a roll of transponders has a considerable volume, folding this holding bracket can result in a size reduction.

In yet another embodiment, the mobile apparatus comprises a handlebar connected to the robust housing for carrying the mobile apparatus. This handlebar can be used for moving the mobile apparatus. A comfortable operation becomes possible.

In yet another embodiment, the mobile apparatus comprises a user interface for communicating with a user of the mobile apparatus. The user interface preferably includes a touch screen. A user interface at the apparatus allows a user (also referred to as operator) to interact with the mobile apparatus and to specify the parameters for programming the transponders. By making use of a touch screen, a very robust design and an intuitive use for lay persons become possible.

Herein, a sports timing RFID transponder particularly refers to a passive RFID tag. Preferably, the sports timing RFID transponder includes a spacer material that is laminated to an antenna of the transponder. The spacer material then provides an increased distance between a human body and the transponder when the transponder is attached to a bib number for being worn by an athlete or attached to a shirt of an athlete. A sports event is particularly a running event such as a marathon or the like. An identification information is unique for a certain event. Preferably an alphanumeric identifier can be used. The mobile apparatus is suitable for an on-site use due to its size, weight and simple user interface. It is to be understood that the apparatus may very well also be used in a stationary facility, e.g. at a timer's office etc.

These and other aspects of the invention will be apparent from and elucidated with reference to the embodiment(s) described hereinafter. In the following drawings
- Fig. 1: shows a schematic illustration of a participant of a sports event having a bib number with a sports timing RFID transponder attached thereto;
- Fig. 2: shows a schematic illustration of a sports timing RFID transponder including a spacer;
- Fig. 3: shows an illustration of a mobile apparatus according to an aspect of the present invention;
- Fig. 4: shows another illustration of the mobile apparatus with a blanked-out front plate;
- Fig. 5: shows yet another illustration of a mobile apparatus from a rear perspective with a removed cover plate;
- Fig. 6: shows a schematic illustration of a system according to an aspect of the present invention; and
- Fig. 7: shows a schematic illustration of a method according to an aspect of the present invention.

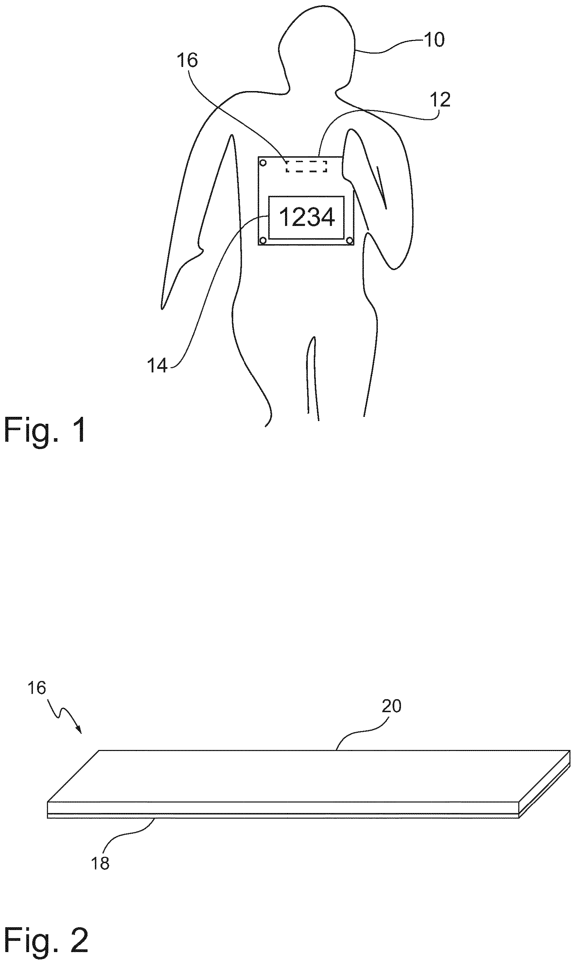

In Fig. 1, an athlete 10 participating in a sports event (also referred to as a participant) is schematically illustrated. As exemplarily illustrated, the athlete 10 may particularly be a runner in a running event such as a marathon or the like. The athlete 10 is identified by means of a bib number 12 that is usually attached to a shirt. It is, however, also possible that the bib number is attached to a sporting device such as a bike or a ski pole etc. The bib number 12 usually includes an identification number 14 which is used for a visual identification of the athlete 10. When the athlete 10 crosses the finish line, for instance, a spectator can immediately identify him by looking up the identification number 14.

In addition, for an automated timing, the athlete 10 carries a sports timing RFID transponder 16, which is commonly attached to the bib number 12. To prevent the transponder 16 from accidentally falling off the bib number 12, it is usually attached to a backside, i.e. the side of the bib number 12 that is oriented in the direction of the athlete's body (as illustrated by the dashed line in the figure). Since the transponder is therefore usually within an immediate vicinity of the body, a radio signal exchanged with the transponder 16 may suffer from damping effects. These effects can lead to bad reception and a loss of reads. To avoid this and to assure high detection rates of transponders upon passing measuring points, a distance between the body and the transponder and in particular its antenna, is artificially increased by a spacer material.

In Fig. 2, a sports timing RFID transponder 16 is schematically illustrated. The transponder includes a transponder antenna 18 and a spacer material 20. The transponder is usually attached to the bib number on the side of its transponder antenna 18. Then, the spacer material 20 faces the human body and provides a minimum distance between the transponder antenna 18 and the body of the participant when the participant has the bib number attached to his shirt. Usually, the spacer mainly consists of a foam material that is attached to the transponder antenna 18.

Conventionally, RFID transponders are programmed with identification numbers that are unique for a certain event and then shipped to the sports timing provider. To avoid confusion regarding the identification number, this number is normally printed onto the transponder, e.g. onto the spacer material. The transponder is thus labeled. To apply this label, a conventional label printer is usually equipped with an additional RFID unit for programming the transponder after printing. These so-called RFID-printers are usually controlled by a PC and require an expert for the handling since they include a printing unit (usually a thermo-transfer printing unit) for printing on the transponder according to the programming. This printing unit is usually sensitive and different expendable materials are required.

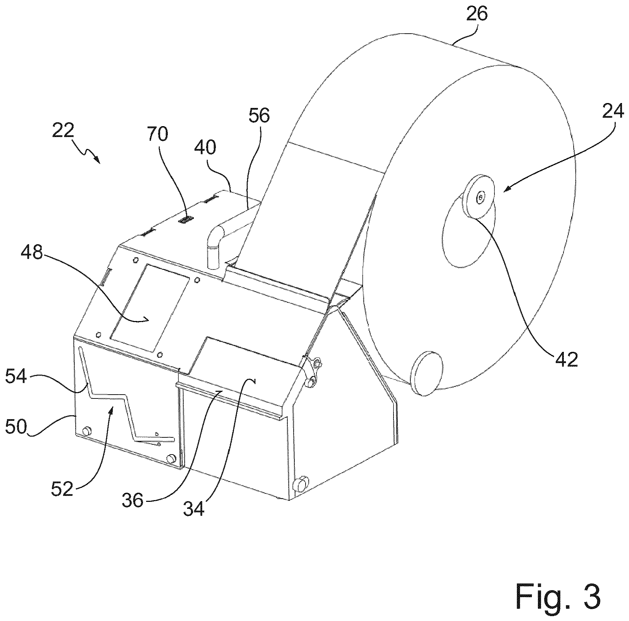

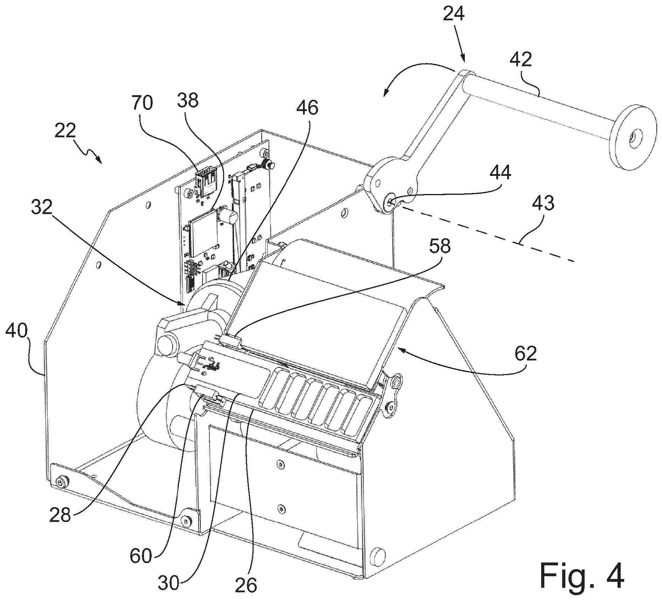

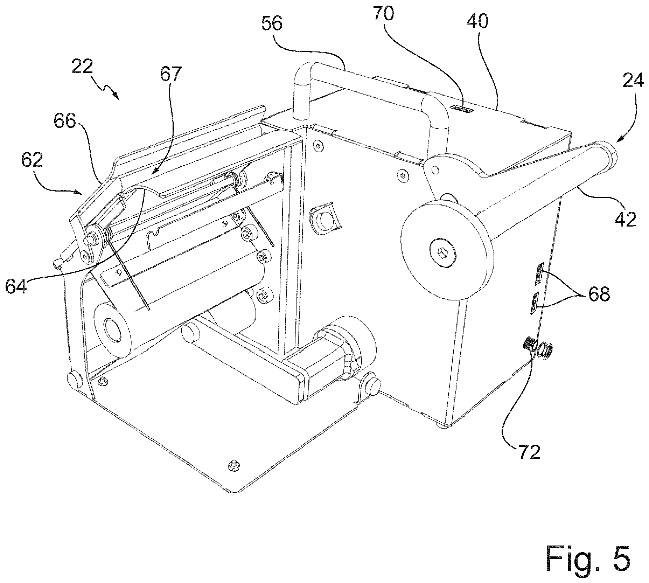

In Figures 3 to 5, an embodiment of a mobile apparatus 22 according to an aspect of the present invention is illustrated. Fig. 3 shows a frontal perspective illustration of the mobile apparatus. Fig. 4 shows an illustration in which a front plane is blanked out to illustrate the internal components. Fig. 5 shows a rear view of the mobile apparatus 22 wherein a part of the housing is blanked out to illustrate the internal components.

The mobile apparatus 22 includes a supply unit 24 for holding a supply 26 of transponders, a programmer unit 28 including a programming antenna 30 by which a transponder can be programmed, a conveyor unit 32 which conveys the transponders from the supply unit 24 to a programming position 34 next to the programming antenna 30 and from there to a dispensing position 36 after the programming is complete, and a processing unit 38 that controls the programmer unit 28 and the conveyor unit 32. The different components are protected from external forces by means of a robust housing 40.

The mobile apparatus 22 does not include a printing unit for labelling the transponder. The transponders are produced on-site at the sports event and directly applied to the respective bib number. The total size of the mobile apparatus can be reduced and a robust design can be obtained. It is possible to transport the mobile apparatus to the sports event and put it to use under rough conditions (dirt, external forces, vibrations during the transport etc.).

In the illustrated embodiment, the supply unit 24 is suitable for holding a roll with transponders representing the supply 26. The transponders are not yet appropriately programmed. The unprogrammed transponders usually come attached to a substrate that is reeled to a roll. It is possible that the transponders of the supply 26 have a pre-programmed ID that is to be replaced by a desired eventspecific ID by means of the mobile apparatus 22. For holding the roll of transponders, the supply unit 24 includes a holding bracket 42 with a support for holding the roll and a cantilever for connecting the support to the robust housing 40. The support is orthogonal to the cantilever. The holding bracket 42 can be folded from a holding position to a transport position by rotating the holding bracket about a rotation axis 43 parallel to the support, orthogonal to the cantilever and defined by the connection point 44 of the holding bracket 42 and the robust housing 40. The arrow in Fig. 4 schematically illustrates the direction of the folding from the holding position (as illustrated) to the transport position (not illustrated). In the transport position, the total size of the mobile apparatus 22 is smaller which facilitates a transport and reduces a risk of damaging the apparatus during the transport.

The programmer unit 28 particularly comprises the programming antenna 30 and the required circuitry for transmitting an RFID signal to a transponder. The programmer unit is connected to the processing unit 38. The processing unit controls the programmer unit 28 to program the desired identification information to the transponder. The programming antenna 30 is designed for communicating with the transponder in the programming position 34 in terms of frequency and directionality.

The conveyor unit 32 includes a motor 46 for propelling different drive rollers. The drive rollers transport the substrate on which a plurality of transponders is arranged from the roll to the programming position 34 and to the dispensing position 36. Usually, the processing unit 38 controls the transport of the transponders based on user input and sensor input. In particular, it is possible that the transport from the programming position 34 to the dispensing position 36 is initiated when the programming is complete. A subsequent transponder is transported into the programming position 34 after the transponder has been removed.

The processing unit 38 particularly includes a microcontroller to control the different components. The processing unit 38 is connected to the different units and performs a control based on sensor and/or user input.

The robust housing 40 is particularly manufactured from metal to be robust against external effects like water (rain), dirt, vibrations or rough handling. In particular, steel can be used.

In the illustrated embodiment, the mobile apparatus usually also includes a user interface 48. Usually, a touch-screen display is used as the user interface 48 that allows displaying information and receiving a user input. Via this user input control commands or identification information to be programmed on a transponder can be obtained.

In the illustrated example, the mobile apparatus 22 further includes a reader unit 50. The reader unit 50 allows reading a programmed transponder that is being positioned in an immediate vicinity of the reader unit. For this, a reader antenna 54 represented by a slot antenna corresponding to a slot in the metallic robust housing 40 is used. The slot has a length that corresponds to the wavelength of the transponder. This slot antenna is a reliable antenna and allows for a very robust design since no further parts are needed. When a transponder is held in a reading position 52 in front of the reader unit 50, it is possible to read the transponder. The result of the reading may be displayed on the touch-screen display representing the user interface 48.

Still further, the mobile apparatus 22 includes a handlebar 56 to allow for an easy transport of the apparatus 22. The handlebar is connected to the robust housing 40. Preferably, the connection is in a center of gravity of the mobile apparatus 22.

In order to determine whether a transponder is in the programming position 34 and can be programmed, a first position sensor 58 can be used. In the illustrated example, this first position sensor 58 includes a photosensor, in particular a light barrier, that detects the presence of the transponder in the programming position 34. When the light barrier is interrupted, a transponder is in the programming position 34. The programming is only initiated after the presence of the transponder in the programming position 34 is detected.

When the programming is finished, the transponder is conveyed to the dispensing position 36. In the dispensing position 36, a second position sensor 60 is used to determine whether the transponder has been removed, i.e. whether the dispensing position is free so that the next transponder can be programmed and conveyed to the dispensing position 36. The second position sensor 60 also includes a light barrier in the illustrated example and functions in the same way as the first position sensor 58.

Still further, the mobile apparatus 22 includes a shielding unit 62. This shielding unit 62 particularly comprises a lower metal plate 64 and an upper metal plate 66. The two metal plates are above and below the transponder when the transponder is in a feeding position 67 before being conveyed to the programming position 34. The feeding position 67 corresponds to a position of a transponder to be programmed next. This arrangement protects the transponder from being programmed before being in the programming position 34. Oftentimes, some transponders are malfunctioning due to production problems and cannot be programmed. When a malfunctioning transponder is in the programming position 34 and the programming antenna 30 emits a signal for programming the transponder, it is possible that this transponder forwards the signal to a nearby transponder that is then erroneously programmed. To prevent this crosstalk, the shielding unit 62 prevents the transponder in the feeding position 67 from being programmed.

In the illustrated example of the mobile apparatus 22, there is further comprised a first input interface 68, to which a scanner device can be connected. In the illustrated embodiment, the first input interface includes two USB ports. When a scanner device, such as a barcode scanner or a camera, is connected to the first input interface 68, it becomes possible to further automate the process of programming the transponder. For instance, a barcode scanner can be used for reading a barcode on a bib number. Then, the identification information of this barcode can be programmed to the transponder. If a camera is used, it becomes possible to directly read a number printed on the bib number. For this, an optical character recognition (OCR) algorithm can be used. Then, the recognized number can directly be programmed to the transponder.

Still further, the mobile apparatus 22 has a second input interface 70 for connecting to a data carrier. In the illustrated embodiment, the second input interface 70 also includes a USB port that allows connecting a USB stick. By connecting a USB stick, it becomes possible to read a list of identification information from this stick to be programmed to a plurality of transponders. Then, transponders can be programmed according to the list resulting in a fast and reliable programming procedure of multiple transponders. This function is useful if, e.g., a number of participants want to late-register for a marathon event.

In the illustrated embodiment, there is further comprised an energy interface 72, which allows providing the mobile apparatus 22 with a supply voltage. As illustrated, the energy interface can be implemented in the form of a standard 12V connector. A corresponding voltage supply is a standard equipment at sports events. In another embodiment (not illustrated), it is also possible that an internal energy supply is integrated into the robust housing or attached thereto. In particular, a rechargeable battery can be used for a completely self-sufficient operation of the mobile apparatus 22.

In the illustrated embodiment, the programmer unit 28 reads a security feature from the transponder prior to programming the transponder. In particular the security feature can correspond to a pre-programmed feature (a pre-programming). Thus, the transponder having a security feature is pre-programmed with this security feature but unprogrammed in respect to the appropriate identification information. This security feature can be used in a public-private key verification approach and can be generated based on a private key, e.g. at the manufacturer of the transponder or at the sports timer's facility. The public key is known in the processing unit 38 of the mobile apparatus 22. Based on the public key, it is possible to verify that the security feature indicates that the transponder originates from a trusted manufacturer. The security feature thereby is usually a pre-programmed alphanumeric code that has been generated based on the private key in the manufacturing process. This check allows the manufacturer to assure that only original transponders are programmed by the mobile apparatus 22.

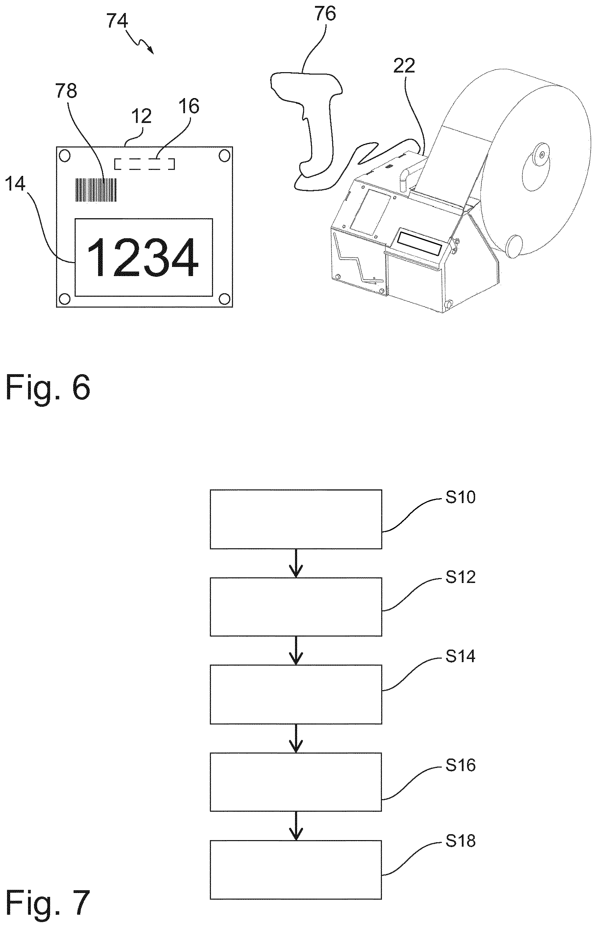

In Fig. 6, an embodiment of a system 74 of the present invention is schematically illustrated. The system 74 includes a mobile apparatus 22 as described above. A scanner device 76 in the form of a barcode scanner is connected to the mobile apparatus 22 that allows reading a participant identifier corresponding to an identity of an athlete participating in the sports event. In the illustrated example the participant identifier 78 is represented by a barcode that is printed or attached to the bib number 12. Based on this barcode, the identification information can be determined. It is, however, also possible that a camera is used as the scanner device to directly recognize the identification number 14 of the bib number 12 (which then represents the participant identifier). Further, the system 74 includes a sports timing RFID transponder 16, which is attached to a backside of the bib number 12.

In Fig. 7, a method according to an aspect of the present invention is schematically illustrated. The method includes steps of holding S10 a supply of transponders in a supply unit, programming S12 the transponder, conveying S14 the transponder, controlling S16 the programmer unit and the conveyor unit and protecting S18 the different units from external force effects. The method may particularly be partly implemented in software.

Thus, the foregoing discussion discloses and describes merely exemplary embodiments of the present disclosure.

In the claims, the word "comprising" does not exclude other elements or steps, and the indefinite article "a" or "an" does not exclude a plurality. A single element or unit may fulfill the functions of several items recited in the claims. The mere fact that certain measures are recited in mutually different dependent claims does not indicate that a combination of these measures cannot be used to advantage.

The elements and units of the disclosed apparatuses, devices, circuitry and system may be implemented by corresponding hardware and/or software elements, for instance appropriated circuits. A circuit is a structural assemblage of electronic components including conventional circuit elements, integrated circuits including application-specific integrated circuits, standard integrated circuits, application-specific standard products, and field programmable gate arrays. Further a circuit includes central processing units, graphics processing units, and microprocessors which are programmed or configured according to software code. A circuit does not include pure software, although a circuit includes the above-described hardware executing software.

## Claims

1. Mobile apparatus (22) for programming a sports timing RFID transponder (16) on-site at a sports event, comprising:
a supply unit (24) for holding a supply (26) of transponders;
a programmer unit (28) including a programming antenna (30) for programming the transponder with an identification information;
a conveyor unit (32) for conveying the transponder from the supply unit to a programming position (34), in which a transponder antenna (18) of the transponder is aligned with the programming antenna, and from the programming position to a dispensing position (36), in which the transponder can be removed after programming;
a processing unit (38) for controlling the programmer unit and the conveyor unit;
a robust housing (40) for protecting the programmer unit, the conveyor unit and the processing unit from external force effects;
**characterized by**
a reader unit (50) including a reader antenna (54) for reading a transponder (16) in a reading position (52), wherein
said reading position is outside the robust housing (40) in an immediate vicinity of the reader antenna.

2. Mobile apparatus (22) as defined in claim 1, wherein the mobile apparatus does not comprise a printing unit for labeling the transponder (16).

3. Mobile apparatus (22) as defined in claim 1, wherein the robust housing (40) includes a metal material and the reader antenna (54) is a slot antenna in said metal material; and/or
the reader antenna is a near-field antenna.

4. Mobile apparatus (22) as defined in any one of the preceding claims, comprising a first position sensor (58) for determining whether the transponder (16) is in the programming position (34), wherein
the processing unit (38) is configured to control the programmer unit (28) to program the transponder when the transponder is in the programming position (34).

5. Mobile apparatus (22) as defined in any one of the preceding claims, comprising a second position sensor (60) for determining whether the dispensing position (36) is free, wherein
the processing unit (38) is configured to control the conveyor unit (32) to convey the transponder (16) to the dispensing position when the dispensing position is free.

6. Mobile apparatus (22) as defined in any one of the preceding claims, comprising
a shielding unit (62) for shielding the transponder (16) from being programmed when the transponder is in a feeding position (67) for being conveyed to the programming position (34) in a next step.

7. Mobile apparatus (22) as defined in any one of the preceding claims, wherein
the programmer unit (28) is configured to read a security feature from the transponder (16) before programming the transponder;
the processing unit (38) is configured to verify whether the security feature indicates that the transponder originates from a trusted manufacturer based on a public key available in the processing unit; and
the programmer unit is configured to only program the transponder when the transponder originates from a trusted manufacturer.

8. Mobile apparatus (22) as defined in any one of the preceding claims, comprising a first input interface (68) for connecting to a scanner device (76) for providing a scan of a participant identifier (78), wherein
the processing unit (38) is configured to determine the identification information based on the scanned participant identifier and to control the programmer unit (28) to program the transponder (16) with the determined identification information.

9. Mobile apparatus (22) as defined in any one of the preceding claims, comprising a second input interface (70) for connecting to a data carrier storing an identification information, wherein
the processing unit (38) is configured to control the programmer unit (28) to program the transponder (16) with the identification information on the data carrier.

10. Mobile apparatus (22) as defined in any one of the preceding claims, comprising at least one of
an energy interface (72) for connecting to an external energy source providing a low voltage; and
an internal energy supply, in particular a rechargeable battery.

11. Mobile apparatus (22) as defined in any one of the preceding claims, wherein
the supply unit (24) comprises a holding bracket (42) for holding a roll of transponders (16) on a substrate;
said holding bracket is configured for being folded from a holding position, in which the roll of transponders can be held, to a transport position, in which a total size of the mobile apparatus is reduced.

12. Using a mobile apparatus (22) as defined in any one of the preceding claims on-site at a sports event.

13. Method for programming a sports timing RFID transponder (16) on-site at a sports event, comprising the steps of:
holding (S10) a supply (26) of transponders in a supply unit (24);
programming (S12) the transponder with an identification information in a programmer unit (28) including a programming antenna (30);
conveying (S14) the transponder with a conveyor unit (32) from the supply unit to a programming position (34), in which a transponder antenna (18) of the transponder is aligned with the programming antenna, and from the programming position to a dispensing position (36), in which the transponder can be removed after programming;
controlling (S16) the programmer unit and the conveyor unit;
protecting (S18) the programmer unit, the conveyor unit and the processing unit (38) from external force effects by a housing of a mobile apparatus; and
reading a transponder in a reading position (52) by means of a reader unit (50) including a reader antenna (54) of the mobile apparatus, wherein
said reading position is outside the robust housing in an immediate vicinity of the reader antenna.

14. System (74) for programming a sports timing RFID transponder (16) on-site at a sports event, comprising:
a mobile apparatus (22) as defined in any one of claims 1 to 11;
a scanner device (76) for providing a scan of a participant identifier (78); and
a sports timing RFID transponder.

## Patentansprüche

1. Mobile Vorrichtung (22) zum Programmieren eines Sportzeitmess-RFID-Transponders (16) vor Ort bei einer Sportveranstaltung, umfassend:
eine Vorratseinheit (24) zum Halten eines Vorrats (26) von Transpondern;
eine Programmiereinheit (28) mit einer Programmierantenne (30) zum Programmieren des Transponders mit einer Identifikationsinformation;
eine Fördereinheit (32) zum Fördern des Transponders von der Vorratseinheit zu einer Programmierposition (34), in der eine Transponderantenne (18) des Transponders auf die Programmierantenne ausgerichtet ist, und von der Programmierposition zu einer Ausgabeposition (36), aus der der Transponder nach der Programmierung entnommen werden kann;
eine Verarbeitungseinheit (38) zum Steuern der Programmiereinheit und der Fördereinheit;
ein robustes Gehäuse (40) zum Schutz der Programmiereinheit, der Fördereinheit und der Verarbeitungseinheit vor äußeren Krafteinwirkungen;
**gekennzeichnet durch**
eine Ausleseeinheit (50) umfassend eine Ausleseantenne (54) zum Auslesen eines Transponders (16) in einer Ausleseposition (52), wobei
sich die Ausleseposition außerhalb des robusten Gehäuses (40) in unmittelbarer Nähe zu der Ausleseantenne befindet.

2. Mobile Vorrichtung (22) nach Anspruch 1, wobei die mobile Vorrichtung keine Druckeinheit zum Beschriften des Transponders (16) umfasst.

3. Mobile Vorrichtung (22) nach Anspruch 1, wobei das robuste Gehäuse (40) ein Metallmaterial umfasst und die Ausleseantenne (54) eine Schlitzantenne in dem Metallmaterial ist; und/oder die Ausleseantenne eine Nahfeldantenne ist.

4. Mobile Vorrichtung (22) nach einem der vorhergehenden Ansprüche, umfassend einen ersten Positionssensor (58) zum Bestimmen, ob sich der Transponder (16) in der Programmierposition (34) befindet, wobei
die Verarbeitungseinheit (38) dazu ausgebildet ist, die Programmiereinheit (28) zum Programmieren des Transponders zu steuern, wenn sich der Transponder in der Programmierposition (34) befindet.

5. Mobile Vorrichtung (22) nach einem der vorhergehenden Ansprüche, umfassend einen zweiten Positionssensor (60) zum Bestimmen, ob die Ausgabeposition (36) frei ist, wobei
die Verarbeitungseinheit (38) dazu ausgebildet ist, die Fördereinheit (32) zum Befördern des Transponders (16) zu der Ausgabeposition zu veranlassen, wenn die Ausgabeposition frei ist.

6. Mobile Vorrichtung (22) nach einem der vorhergehenden Ansprüche, umfassend
eine Abschirmeinheit (62) zum Abschirmen des Transponders (16) vor Programmierung, wenn sich der Transponder in einer Zuführposition (67) befindet, um in einem nächsten Schritt in die Programmierposition (34) befördert zu werden.

7. Mobile Vorrichtung (22) nach einem der vorhergehenden Ansprüche, wobei
die Programmiereinheit (28) dazu ausgebildet ist, ein Sicherheitsmerkmal von dem Transponder (16) auszulesen, bevor der Transponder programmiert wird;
die Verarbeitungseinheit (38) dazu ausgebildet ist, basierend auf einem in der Verarbeitungseinheit verfügbaren öffentlichen Schlüssel zu überprüfen, ob das Sicherheitsmerkmal anzeigt, dass der Transponder von einem vertrauenswürdigen Hersteller stammt; und
die Programmiereinheit dazu ausgebildet ist, den Transponder nur dann zu programmieren, wenn der Transponder von einem vertrauenswürdigen Hersteller stammt.

8. Mobile Vorrichtung (22) nach einem der vorhergehenden Ansprüche, umfassend eine erste Eingabeschnittstelle (68) zum Verbinden mit einer Scannervorrichtung (76) zum Bereitstellen eines Scans einer Teilnehmerkennung (78), wobei
die Verarbeitungseinheit (38) dazu ausgebildet ist, die Identifikationsinformationen basierend auf der gescannten Teilnehmerkennung zu bestimmen und die Programmiereinheit (28) zu steuern, um den Transponder (16) mit den bestimmten Identifikationsinformationen zu programmieren.

9. Mobile Vorrichtung (22) nach einem der vorhergehenden Ansprüche, umfassend eine zweite Eingabeschnittstelle (70) zum Verbinden mit einem Datenträger, auf dem eine Identifikationsinformation gepeichert ist, wobei
die Verarbeitungseinheit (38) dazu ausgebildet ist, die Programmiereinheit (28) zu steuern, um den Transponder (16) mit der Identifikationsinformation auf dem Datenträger zu programmieren.

10. Mobile Vorrichtung (22) nach einem der vorhergehenden Ansprüche, umfassend mindestens eines der Folgenden:
eine Energieschnittstelle (72) zum Anschließen an eine externe Energiequelle, die eine niedrige Spannung bereitstellt; und
eine interne Energieversorgung, insbesondere eine wiederaufladbare Batterie.

11. Mobile Vorrichtung (22) nach einem der vorhergehenden Ansprüche, wobei
die Vorratseinheit (24) einen Haltebügel (42) zum Halten einer Rolle von Transpondern (16) auf einem Substrat umfasst;
der Haltebügel dazu ausgebildet ist, aus einer Halteposition, in der die Rolle von Transpondern gehalten werden kann, in eine Transportposition, in der eine Gesamtgröße der mobilen Vorrichtung reduziert ist, zusammengeklappt zu werden.

12. Verwendung einer mobilen Vorrichtung (22) nach einem der vorhergehenden Ansprüche vor Ort bei einer Sportveranstaltung.

13. Verfahren zum Programmieren eines Sportzeitmess-RFID-Transponders (16) vor Ort bei einer Sportveranstaltung, umfassend die Schritte:
Halten (S10) eines Vorrats (26) von Transpondern in einer Vorratseinheit (24);
Programmieren (S12) des Transponders mit einer Identifikationsinformation in einer Programmiereinheit (28), die eine Programmierantenne (30) umfasst;
Befördern (S14) des Transponders mit einer Fördereinheit (32) von der Vorratseinheit zu einer Programmierposition (34), in der eine Transponderantenne (18) des Transponders auf die Programmierantenne ausgerichtet ist, und von der Programmierposition zu einer Ausgabeposition (36), aus der der Transponder nach dem Programmieren entnommen werden kann;
Steuern (S16) der Programmiereinheit und der Fördereinheit;
Schützen (S18) der Programmiereinheit, der Fördereinheit und der Verarbeitungseinheit (38) vor äußeren Krafteinwirkungen durch ein Gehäuse einer mobilen Vorrichtung; und
Auslesen eines Transponders in einer Ausleseposition (52) mittels einer Ausleseeinheit (50) umfassend eine Ausleseantenne (54) der mobilen Vorrichtung, wobei
sich die Ausleseposition außerhalb des robusten Gehäuses in unmittelbarer Nähe zu der Ausleseantenne befindet.

14. System (74) zum Programmieren eines Sportzeitmess-RFID-Transponders (16) vor Ort bei einer Sportveranstaltung, umfassend:
eine mobile Vorrichtung (22) nach einem der Ansprüche 1 bis 11;
eine Scannervorrichtung (76) zum Bereitstellen eines Scans einer Teilnehmerkennung (78); und
einen Sportzeitmess-RFID-Transponder.

## Revendications

1. Appareil mobile (22) pour programmer un transpondeur RFID de chronométrage sportif (16) sur site lors d'un événement sportif, comprenant :
une unité d'alimentation (24) pour contenir une alimentation (26) en transpondeurs ;
une unité de programmateur (28) qui inclut une antenne de programmation (30) pour programmer le transpondeur à l'aide d'une information d'identification ;
une unité de convoyeur (32) pour convoyer le transpondeur depuis l'unité d'alimentation jusqu'à une position de programmation (34), position dans laquelle une antenne de transpondeur (18) du transpondeur est alignée avec l'antenne de programmation, et depuis la position de programmation jusqu'à une position de délivrance (36), position dans laquelle le transpondeur peut être enlevé après programmation ;
une unité de traitement (38) pour commander l'unité de programmateur et l'unité de convoyeur ; et
un boîtier robuste (40) pour protéger l'unité de programmateur, l'unité de convoyeur et l'unité de traitement vis-à-vis des effets de forces externes ;
**caractérisé par** :
une unité de lecteur (50) qui inclut une antenne de lecteur (54) pour lire un transpondeur (16) dans une position de lecture (52) ; dans lequel :
ladite position de lecture est à l'extérieur du boîtier robuste (40) au voisinage immédiat de l'antenne de lecteur.

2. Appareil mobile (22) tel que défini selon la revendication 1, dans lequel l'appareil mobile ne comprend pas d'unité d'impression pour l'étiquetage du transpondeur (16).

3. Appareil mobile (22) tel que défini selon la revendication 1, dans lequel :
le boîtier robuste (40) inclut un matériau métallique et l'antenne de lecteur (54) est une antenne à fente(s) dans ledit matériau métallique ; et/ou l'antenne de lecteur est une antenne de champ proche.

4. Appareil mobile (22) tel que défini selon l'une quelconque des revendications précédentes, comprenant un premier capteur de position (58) pour déterminer si le transpondeur (16) est dans la position de programmation (34), dans lequel :
l'unité de traitement (38) est configurée pour commander l'unité de programmateur (28) afin de programmer le transpondeur lorsque le transpondeur est dans la position de programmation (34).

5. Appareil mobile (22) tel que défini selon l'une quelconque des revendications précédentes, comprenant un second capteur de position (60) pour déterminer si la position de délivrance (36) est libre, dans lequel :
l'unité de traitement (38) est configurée pour commander l'unité de convoyeur (32) afin de convoyer le transpondeur (16) jusqu'à la position de délivrance lorsque la position de délivrance est libre.

6. Appareil mobile (22) tel que défini selon l'une quelconque des revendications précédentes, comprenant :
une unité de protection (62) pour protéger le transpondeur (16) d'être programmé lorsque le transpondeur est dans une position d'acheminemant (67) pour être convoyé jusqu'à la position de programmation (34) lors d'une étape suivante.

7. Appareil mobile (22) tel que défini selon l'une quelconque des revendications précédentes, dans lequel :
l'unité de programmateur (28) est configurée pour lire une caractéristique de sécurité à partir du transpondeur (16) avant la programmation du transpondeur ;
l'unité de traitement (38) est configurée pour vérifier si la caractéristique de sécurité indique que le transpondeur provient d'un fabricant de confiance sur la base d'une clé publique qui est disponible dans l'unité de traitement ; et
l'unité de programmateur est configurée pour programmer le transpondeur seulement lorsque le transpondeur provient d'un fabricant de confiance.

8. Appareil mobile (22) tel que défini selon l'une quelconque des revendications précédentes, comprenant une première interface d'entrée (68) pour une connexion sur un dispositif de scanner (76) pour fournir un scan d'un identifiant de participant (78), dans lequel :
l'unité de traitement (38) est configurée pour déterminer l'information d'identification sur la base de l'identifiant de participant scanné et pour commander l'unité de programmateur (28) afin de programmer le transpondeur (16) à l'aide de l'information d'identification déterminée.

9. Appareil mobile (22) tel que défini selon l'une quelconque des revendications précédentes, comprenant une seconde interface d'entrée (70) pour une connexion sur un support de données qui stocke une information d'identification, dans lequel :
l'unité de traitement (38) est configurée pour commander l'unité de programmateur (28) afin de programmer le transpondeur (16) à l'aide de l'information d'identification sur le support de données.

10. Appareil mobile (22) tel que défini selon l'une quelconque des revendications précédentes, comprenant au moins l'une de :
une interface d'énergie (72) pour une connexion sur une source d'énergie externe qui fournit une tension basse ; et
une alimentation en énergie interne, en particulier une batterie rechargeable.

11. Appareil mobile (22) tel que défini selon l'une quelconque des revendications précédentes, dans lequel :
l'unité d'alimentation (24) comprend un étrier de retenue (42) pour retenir un rouleau de transpondeurs (16) sur un substrat ; et
ledit étrier de retenue est configuré pour être replié depuis une position de retenue, position dans laquelle le rouleau de transpondeurs peut être retenu, jusqu'à une position de transport, position dans laquelle une dimension totale de l'appareil mobile est réduite.

12. Utilisation d'un appareil mobile (22) tel que défini selon l'une quelconque des revendications précédentes sur site lors d'un événement sportif.

13. Procédé pour programmer un transpondeur RFID de chronométrage sportif (16) sur site lors d'un événement sportif, comprenant les étapes constituées par :
la retenue (S10) d'une alimentation (26) en transpondeurs dans une unité d'alimentation (24) ;
la programmation (S12) du transpondeur à l'aide d'une information d'identification dans une unité de programmateur (28) qui inclut une antenne de programmation (30) ;
le convoyage (S14) du transpondeur à l'aide d'une unité de convoyeur (32) depuis l'unité d'alimentation jusqu'à une position de programmation (34), position dans laquelle une antenne de transpondeur (18) du transpondeur est alignée avec l'antenne de programmation, et depuis la position de programmation jusqu'à une position de délivrance (36), position dans laquelle le transpondeur peut être enlevé après programmation ;
la commande (S16) de l'unité de programmateur et de l'unité de convoyeur;
la protection (S18) de l'unité de programmateur, de l'unité de convoyeur et de l'unité de traitement (38) par rapport aux effets de forces externes au moyen d'un boîtier d'un appareil mobile ; et
la lecture d'un transpondeur dans une position de lecture (52) au moyen d'une unité de lecteur (50) qui inclut une antenne de lecteur (54) de l'appareil mobile ; dans lequel :
ladite position de lecture est à l'extérieur du boîtier robuste au voisinage immédiat de l'antenne de lecteur.

14. Système (74) pour programmer un transpondeur RFID de chronométrage sportif (16) sur site lors d'un événement sportif, comprenant :
un appareil mobile (22) tel que défini selon l'une quelconque des revendications 1 à 11 ;
un dispositif de scanner (76) pour fournir un scan d'un identifiant de participant (78) ; et
un transpondeur RFID de chronométrage sportif.
